# EUROPEAN PATENT APPLICATION

(11) **EP 3 425 533 A1**
(43) Date of publication of application: **09.01.2019**
(21) Application number: 18180316.4
(22) Date of filing: 28.06.2018
(51) Int. Cl.: G06F 17/30

(54) **DISPLAYING PAGE**

(30) Priority: 07.07.2017 CN 201710552111
(71) Applicant: Beijing Xiaomi Mobile Software Co., Ltd., Beijing 100085 (CN)
(72) Inventor: DONG, Hongguang, Beijing 100085 (CN); WU, Hua, Beijing 100085 (CN)
(74) Representative: dompatent von Kreisler Selting Werner - Partnerschaft von Patent- und Rechtsanwälten mbB

(57) **Abstract**

A method and an apparatus for displaying a page are provided. According to an example of the method, page data is acquired for a preset time period; page change information is acquired based on first page data and second page data; and then the page change information is transmitted to a process for generating the page in an operating system; where the first page data is acquired in a current preset time period and the second page data is acquired in a previous preset time period.

## Description

### TECHNICAL FIELD

The present disclosure relates to the field of computer software technology, and in particularly, relates to displaying a page.

### BACKGROUND

Some applications may output page information to a user through a user interface (UI) when the applications operate on a terminal device. For example, an application may detect whether a page changes in real time. When it is detected that the page changes, the application may acquire page change information, and report the page change information to a UI process for generating the page in an operating system to re-render and display the changed page. However, when a frequency at which the page changes is high, the problem of dropped picture frame and stalled display may arise due to the amount of calculation and time required for calculating the page change.

### SUMMARY

The present disclosure provides a method and an apparatus for displaying a page. According to a first aspect of an example of the present disclosure, a method of displaying a page is provided. The method may include: acquiring page data for a preset time period; acquiring page change information based on first page data and second page data, where the first page data is acquired in a current preset time period and the second page data is acquired in a previous preset time period; and transmitting the page change information to a process for generating the page in an operating system.

According to a second aspect of an example of the present disclosure, an apparatus for displaying a page is provided. The apparatus may include: a processor; and a memory storing machine-executable instructions, and when the machine-executable instructions are executed, the processor is caused to: acquire page data for a preset time period; acquire page change information based on first page data and second page data, where the first page data is acquired in a current preset time period and the second page data is acquired in a previous preset time period; and transmit the page change information to a process for generating the page in an operating system.

According to a third aspect of an example of the present disclosure, a non-transitory computer-readable storage medium storing at least one instruction is provided, where the at least one instruction is loaded and executed by a processor to perform: acquiring page data for a preset time period; acquiring page change information based on the first page data and second page data, where the first page data is acquired in a current preset time period and the second page data is acquired in a previous preset time period; and transmitting the page change information to a process for generating the page in an operating system.

It is to be understood that both the foregoing general description and the following detailed description are illustrative and explanatory merely and are not restrictive of the present disclosure.

### BRIEF DESCRIPTION OF DRAWINGS

The accompanying drawings herein, which are incorporated in and constitute a part of the specification, illustrate examples consistent with the present disclosure, and serve to explain the principles of the present disclosure together with the specification.
FIG. 1 is a flowchart illustrating a method of displaying a page according to an example of the present disclosure.
FIG. 2 is a flowchart illustrating a method of displaying a page according to another example of the present disclosure.
FIG. 3 is a flowchart illustrating a method of displaying a page according to still another example of the present disclosure.
FIG. 4 is a block diagram illustrating an apparatus for displaying a page according to an example of the present disclosure.
FIG. 5 is a block diagram illustrating an apparatus for displaying a page according to another example of the present disclosure.
FIG. 6 is a block diagram illustrating an apparatus for displaying a page according to still another example of the present disclosure.
FIG. 7 is a schematic diagram illustrating a structure of an apparatus for displaying a page according to an example of the present disclosure.

### DETAILED DESCRIPTION

Illustrative examples will be described in detail herein with the examples thereof expressed in the drawings. When the following descriptions involve the drawings, like numerals in different drawings represent like or similar elements unless stated otherwise. The implementations described in the following examples do not represent all implementations consistent with the present disclosure. On the contrary, they are examples of an apparatus and a method consistent with some aspects of the present disclosure as described in detail in the appended claims.

The terminology used in the present disclosure is for the purpose of describing a particular example only, and is not intended to be limiting of the present disclosure. The singular forms such as "a", 'said", and "the" used in the present disclosure and the appended claims are also intended to include multiple, unless the context clearly indicates otherwise. It is also to be understood that the term "and/or" as used herein refers to any or all possible combinations that include one or more associated listed items.

It is to be understood that although different information may be described using the terms such as first, second, third, etc. in the present disclosure, and such information should not be limited to these terms. These terms are used only to distinguish the same type of information from each other. For example, the first information may also be referred to as the second information without departing from the scope of the present disclosure, and similarly, the second information may also be referred to as the first information. Depending on the context, the word "if' as used herein may be interpreted as "when" or "as" or "determining in response to".

An application program may generally output information through a native page, and the application may also output web page information due to a need of some services. A hybrid technology is generally used to display a web page. However, rendering of a web page is not as smooth as rendering of a native page, which may affect a page displaying effect of the application program. Therefore, a software operating platform may be developed for a web page. Code data of a web page may operate in an environment established by the software operating platform so as to output information of the web page in the form of a native page. The software operating platform may be pre-installed in a terminal and operate based on an operating system of the terminal. A page may be a web page or a native page of an application. The page may be displayed in a terminal. The method and apparatus for displaying a page, and a terminal thereof provided by the present disclosure are all applicable to the above description.

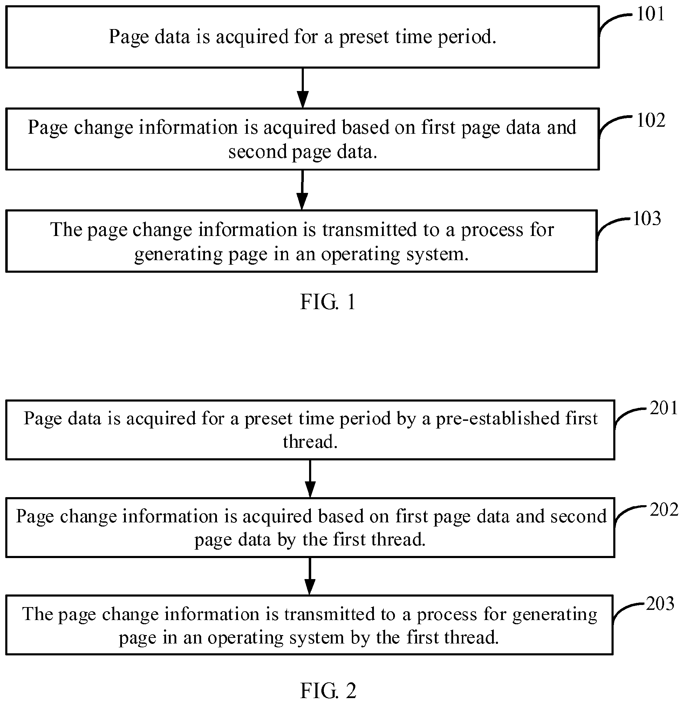

FIG. 1 is a flowchart illustrating a method of displaying a page according to an example of the present disclosure. The method may be applied to a terminal device. An executing subject may be the above software operating platform installed in the terminal device. In this example, for ease of understanding, description will be made with a terminal device having a display screen and capable of installing a third-party application program as an example. The terminal device may include, but not limited to, a mobile terminal device such as a smart phone, a smart wearable device, a tablet computer, a personal digital assistant, an e-book reader, etc. The method may include the following blocks.

At block 101, page data is acquired by a preset time period.

In this example, a timer may be used for timing. Page data is acquired every preset time period when a timing period of the timer expires. The preset time period may be set to any reasonable time length. Optionally, the preset time period may be a same as a period in which a process for generating page in an operating system generates a page. As an example, the page may be generated in 1 second/60HZ, and the preset time period may thus be 16.67 milliseconds. It is to be understood that the preset time period may also be another time length, which is not limited in the present disclosure.

At block 102, page change information is acquired based on first page data and second page data.

In this example, the first page data may be acquired when a current period expires and the second page data may be acquired when a previous period expired. The page data acquired when the current period expires may be compared with the page data acquired when the previous period expired so as to obtain the page change information. Specifically, tree structure data corresponding to the first page data (the page data acquired when the current period expires) may be compared with tree structure data corresponding to the second page data (the page data acquired when the previous period expired) to obtain the page change information. Optionally, the above tree structure data may be tree structure data of a virtual Document Object Model (DOM). It is to be understood that the present disclosure is not limited in this respect.

In an example, the above software operating platform may first acquire the first page data by using a pre-established first thread. Then the pre-established first thread may compare the tree structure data corresponding to the first page data and the second page data respectively so as to obtain the page change information.

The first thread may be a js thread of the software operating platform, i.e., a javascript thread. It is to be understood that the first thread is not limited to the js thread in the present disclosure. When being implemented specifically, the first thread may also be implemented by a developer as another implementable thread.

In another example, the above software operating platform may also first acquire the first page data by using a pre-established first thread, and then the pre-established first thread may transmit the first page data to a pre-established second thread. The pre-established second thread may compare tree structure data corresponding to the first page data and the second page data so as to obtain the page change information. For example, the pre-established second thread may compare the tree structure data of the first page data with the tree structure data of the second page data and the differences of the tree structure data of the first page data and the tree structure data of the second page data are the page change information.

At block 103, the page change information is transmitted to the process for generating page in the operating system.

In an example, if the page change information is acquired by the first thread, the page change information may be directly transmitted to the process for generating page in the operating system by the first thread to instruct the process to generate a page.

In another example, if the page change information is acquired by the second thread, the page change information may be transmitted to the first thread by the second thread and then transmitted by the first thread to the process for generating a page in the operating system to instruct the process to generate a page.

The method of displaying a page provided by the above example of the present disclosure includes: acquiring page data by the preset time period, acquiring page change information based on first page data and second page data, and transmitting the page change information to a process for generating page in the operating system to instruct the process to generate a page. Since the comparison of the page data is performed periodically, even if a frequency at which the page changes is relatively high, both the amount of calculation and the time for calculating the page change will not increase significantly, thereby avoiding the problem of a dropped picture frame or stalled display, and improving effect and efficiency of displaying a page.

FIG. 2 is a flowchart illustrating a method of displaying a page according to another example of the present disclosure. This example describes a process of acquiring page change information based on first page data and second page data in detail. The method may be applied to a terminal device. An executing subject may be the above software operating platform installed in the terminal device. The method may include the following blocks.

At block 201, page data is acquired for a preset time period by a pre-established first thread.

In this example, the above first thread may be one thread of the above software operating platform, and the software operating platform may acquire page data by using the first thread.

At block 202, page change information is acquired based on first page data and second page data by the first thread.

In this example, the above software operating platform may acquire the page change information based on the first page data and the second page data by using the first thread. The first page data is acquired in a current period and the second page data is acquired in a previous period. In one example, the page change information may be the data difference between the first page data and the second page data, where the first page data and the second page data are the page data for a same page but are acquired in different time periods.

At block 203, the page change information is transmitted to a process for generating page in an operating system by the first thread.

In this example, the above software operating platform may transmit the page change information to the process for generating page in the operating system by using the first thread.

It should be noted that the same blocks as those in the example of FIG. 1 will not be described repeatedly in the above example of FIG. 2. Reference may be made to the example of FIG. 1 for related content.

The method of displaying a page provided by the above example of the present disclosure may include: acquiring page data for the preset time period by the pre-established first thread and acquiring page change information based on first page data and second page data, and then transmitting the page change information to the process for generating page in the operating system by the first thread. Since the comparison of the page data is performed periodically using the first thread, even if the frequency at which the page changes is relatively high, the first thread may not frequently perform comparison and calculation, so that both the amount of calculation and the time for calculating the page change will not increase significantly, thereby avoiding the problem of a dropped picture frame or stalled display, and improving the effect and efficiency of displaying a page.

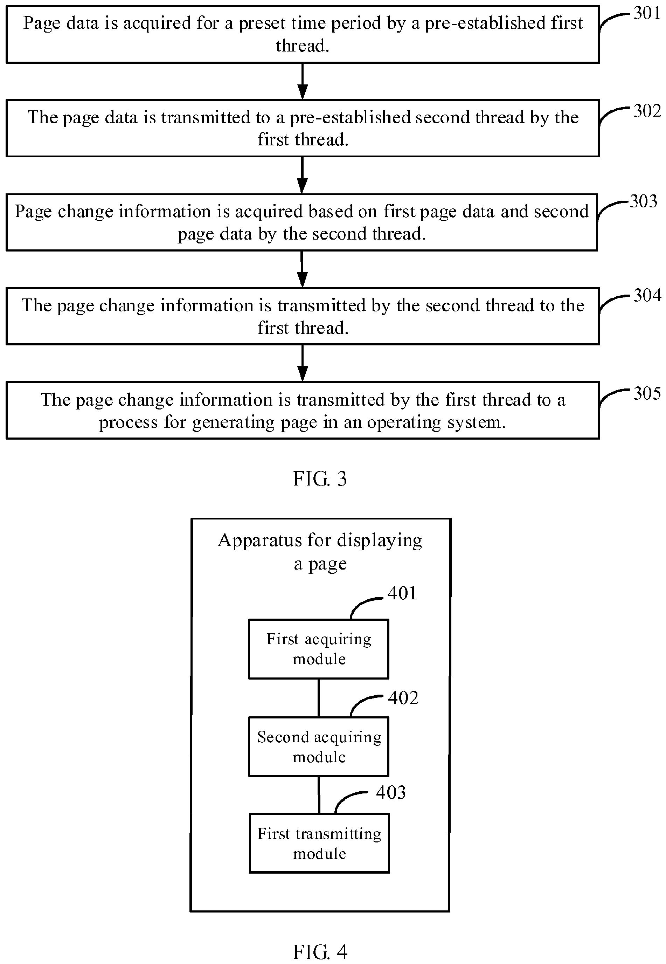

FIG. 3 is a flowchart illustrating a method of displaying a page according to still another example of the present disclosure. This example describes another process of acquiring page change information based on first page data and second page data in detail. The method may be applied to a terminal device. An executing subject may be the above software operating platform installed in the terminal device. The method may include the following blocks.

At block 301, page data is acquired by a preset time period by a pre-established first thread.

In this example, the above first thread may be one thread of the above software operating platform, and the software operating platform may acquire page data by using the first thread.

At block 302, the page data is transmitted to a pre-established second thread by the first thread.

In this example, the above second thread is also one thread of the above software operating platform, and the software operating platform may transmit the page data to the pre-established second thread by using the first thread.

At block 303, page change information is acquired based on first page data and second page data by the second thread.

In this example, the above software operating platform may acquire the page change information based on the first page data and the second page data by using the second thread. The first page data is acquired in a current preset time period and the second page data is acquired in a previous preset time period. Optionally, the second thread may be specifically configured to acquire the page change information.

At block 304, the page change information is transmitted by the second thread to the first thread.

In this example, the above software operating platform may transmit the page change information to the first thread by using the second thread.

At block 305, the page change information is transmitted by the first thread to a process for generating page in the operating system.

In this example, the above software operating platform may transmit the page change information to the process for generating page in the operating system by using the first thread.

It should be noted that the same blocks as those in the example of FIG. 1 will not be described repeatedly in the above example of FIG. 3. Reference may be made to the example of FIG. 1 for related content.

The method of displaying a page provided by the above example of the present disclosure includes: acquiring page data by the preset time period by a pre-established first thread and transmitting the page data to a pre-established second thread, acquiring the page change information based on first page data and second page data by the second thread and transmitting the page change information to the first thread, and finally, transmitting the page change information to the process for generating page in the operating system by the first thread. In addition to performing the task of transmitting the page change information to the process for generating page in the operating system, the first thread of the software operating platform installed in the terminal device may also perform other tasks. Therefore, the software operating platform periodically performs the task of comparing the page data by using the second thread to obtain the page change information, thereby avoiding the problem that the first thread may not perform the task of comparing the page data in time when frequently performing other tasks, further avoiding the problem of a dropped picture frame or stalled display, and improving the effect and efficiency of displaying a page.

It should be noted that although the operations of the method of the present disclosure are described in a particular order in the accompanying drawings, this does not require or imply that these operations must be performed in the particular order, or that all the operations shown must be performed to achieve the desired result. Instead, the blocks depicted in the flowcharts may be changed in the order of execution. Additionally or alternatively, particular blocks may be omitted, or a plurality of blocks may be combined into one block, and/or one block may be divided into a plurality of blocks.

Corresponding to the example of the above method of displaying a page, the present disclosure further provides an example of an apparatus for displaying a page and a terminal to which the apparatus is applied.

FIG. 4 is a block diagram illustrating an apparatus for displaying a page according to an example of the present disclosure. The apparatus may include a first acquiring module 401, a second acquiring module 402, and a first transmitting module 403.

The first acquiring module 401 is configured to acquire page data by a preset time period.

The second acquiring module 402 is configured to acquire page change information based on first page data and second page data.

The first transmitting module 403 is configured to transmit the above page change information to a process for generating page in an operating system.

The first page data is acquired in a current period and the second page data is acquired in a previous period.

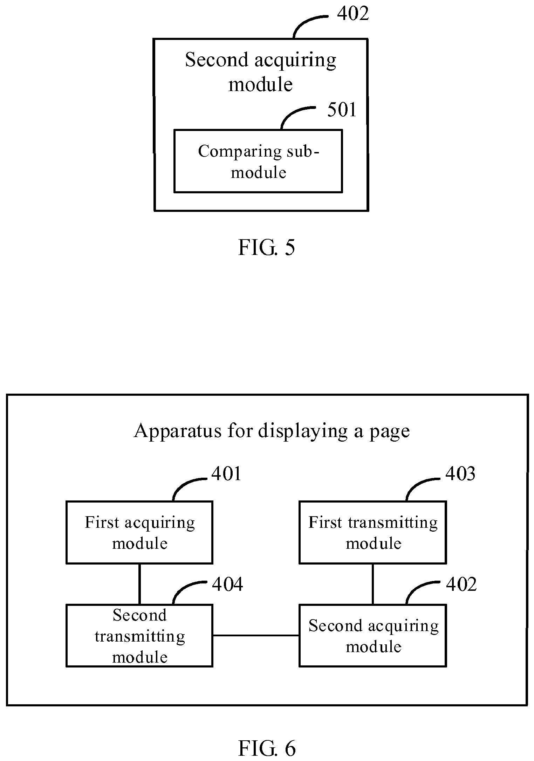

FIG. 5 is a block diagram illustrating an apparatus for displaying a page according to another example of the present disclosure. The example is based on the above example shown in FIG. 4. The second acquiring module 402 may include a comparing sub-module 501.

The comparing sub-module 501 may be configured to acquire the page change information by comparing tree structure data corresponding to the first page data and the second page data, respectively.

In some optional examples, the first acquiring module 401 may be configured to acquire page data by the preset time period by a pre-established first thread.

FIG. 6 is a block diagram illustrating an apparatus for displaying a page according to still another example of the present disclosure. The example is based on the above example shown in FIG. 4. The apparatus may further include a second transmitting module 404.

The second transmitting module 404 may be configured to transmit page data to a pre-established second thread. The second acquiring module 402 may be configured to acquire page change information based on the first page data and the second page data, by the pre-established second thread and transmit the page change information to the pre-established first thread.

In other optional examples, the first transmitting module 403 may be configured to transmit the page change information to the process for generating page in the operating system by the pre-established first thread.

It is to be understood that the above apparatus may be preset in a terminal device, and may also be loaded to the terminal device in a manner such as downloading. The corresponding modules in the above apparatus may cooperate with modules in the terminal device to implement the method of displaying a page.

Since the apparatus examples substantially correspond to the method examples, a reference may be made to part of the descriptions of the method examples. The apparatus examples described above are merely illustrative, where the units described as separate members may be or not be physically separated, and the members displayed as units may be or not be physical units, i.e., may be located in one place, or may be distributed in a plurality of network units. Part or all of the modules may be selected according to actual requirements to implement the objectives of the solutions in the present disclosure.

Correspondingly, the present disclosure further provides a terminal including a processor and a memory storing machine-executable instructions thereon; where the processor is configured to:
acquire page data by a preset time period;
acquire page change information based on first page data and second page data; and
transmit the page change information to a process for generating page in an operating system;
where the first page data is acquired in a current period and the second page data is acquired in a previous period.

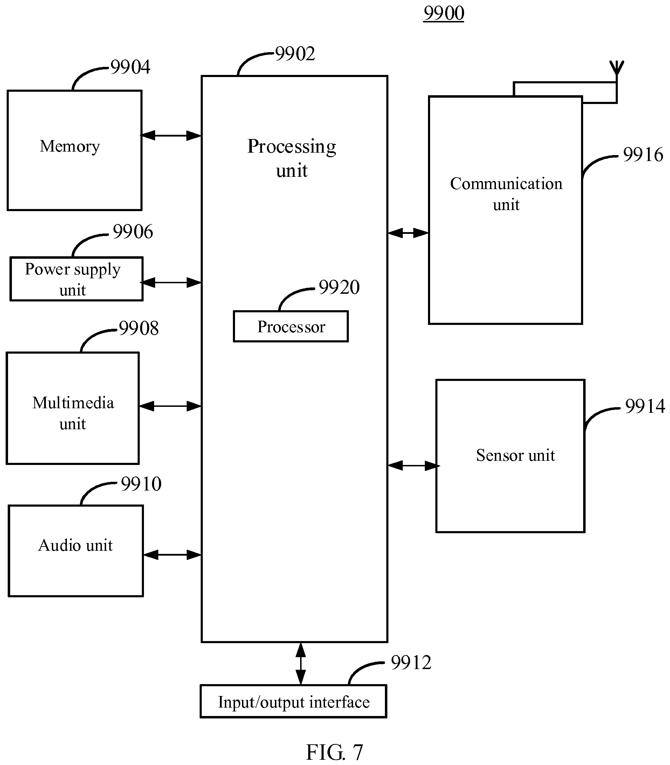

FIG. 7 is a schematic diagram illustrating a structure of an apparatus 9900 for displaying a page according to an example of the present disclosure. For example, the apparatus 9900 may be a mobile phone, a computer, a digital broadcast terminal, a message transceiver, a game console, a tablet device, a medical device, a fitness device, a personal digital assistant, etc.

As shown in FIG. 7, the apparatus 9900 may include one or more of the following units: a processing unit 9902, a memory 9904, a power supply unit 9906, a multimedia unit 9908, an audio unit 9910, an input/output (I/O) interface 9912, a sensor unit 9914, and a communication unit 9916.

The processing unit 9902 may generally control the overall operation of the apparatus 9900, such as operations associated with display, phone call, data communication, camera operation, and recording operations. The processing unit 9902 may include one or more processors 9920 to execute instructions to complete all or a part of the blocks of the above method. In addition, the processing unit 9902 may include one or more modules to facilitate the interaction between the processing unit 9902 and other units. For example, the processing unit 9902 may include a multimedia module to facilitate the interaction between the multimedia unit 9908 and the processing unit 9902.

The memory 9904 may be configured to store different types of data to support operations of the apparatus 9900. Examples of such data may include instructions for any application or method that operates on the apparatus 9900, contact data, phonebook data, messages, pictures, videos, and so on. The memory 9904 may be implemented by any type of volatile or non-volatile memory devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power supply unit 9906 may provide power to different units of the apparatus 9900. The power supply unit 9906 may include a power management system, one or more power supplies, and other units associated with generating, managing, and distributing power for the apparatus 9900.

The multimedia unit 9908 may include a screen providing an output interface between the apparatus 9900 and a user. In some examples, the screen may include a Liquid Crystal Display (LCD) and/or a Touch Panel (TP). If the screen includes a touch panel, the screen may be implemented as a touch screen to receive an input signal from a user. The touch panel includes one or more touch sensors to sense touch, slide and gestures on the touch panel. The touch sensor may not only sense the boundary of a touch or slide operation but also detect duration and pressure relating to the touch or slide operation. In some examples, the multimedia unit 9908 may include a front-facing camera and/or a rear camera. When the apparatus 9900 is in an operating mode, such as in a shooting mode or a video mode, the front-facing camera and/or the rear camera may receive external multimedia data. Each of the front-facing camera and the rear camera may be a fixed optical lens system or may be capable of focal length and optical zoom.

The audio unit 9910 may be configured to output and/or input an audio signal. For example, the audio unit 9910 may include a microphone. When the apparatus 9900 is in an operating mode, for example, in a call mode, a recording mode or a speech recognition mode, the microphone is configured to receive an external audio signal. The received audio signal may be further stored in the memory 9904 or sent via the communication unit 9916. In some examples, the audio unit 9910 may also include a speaker for outputting an audio signal.

The I/O interface 9912 may provide an interface between the processing unit 9902 and a peripheral interface module. The peripheral interface module may be a keyboard, click wheel, a button and the like. Such buttons may include but are not limited to: a home button, a volume button, a start button and a lock button.

The sensor unit 9914 may include one or more sensors for evaluating states of the apparatus 9900 in different aspects. For example, the sensor unit 9914 may detect the on/off state of the apparatus 9900, and relative locations of units, for example, the units are a display and a keypad of the apparatus 9900. The sensor unit 9914 may also detect a position change of the apparatus 9900 or one unit of the apparatus 9900, the presence or absence of contact of a user with the apparatus 9900, an orientation or acceleration/deceleration of the apparatus 9900 and a temperature change of the apparatus 9900. The sensor unit 9914 may include a proximity sensor configured to detect presence of a nearby object without any physical contact. The sensor unit 9914 may also include an optical sensor, such as a CMOS or CCD image sensor to be used in imaging application. In some examples, the sensor unit 9914 may also include an acceleration sensor, a gyroscope sensor, a magnetic sensor, a distance sensor, a pressure sensor, a microwave detector, or a temperature sensor.

The communication unit 9916 is configured to facilitate wired or wireless communication between the apparatus 9900 and other apparatuses. The apparatus 9900 may access a wireless network based on a communication standard, such as WIFI, 2G or 3G, or a combination thereof. In an example, the communication unit 9916 may receive a broadcast signal or broadcast-related information from an external broadcast management system via a broadcast channel. In an example, the communication unit 9916 may also include a Near Field Communication (NFC) module to facilitate short-range communications. For example, the NFC module may be implemented based on Radio Frequency Identification (RFID) technology, Infrared Data Association (IrDA) technology, Ultra Wide Band (UWB) technology, Bluetooth (BT) technology and other technology.

In an example, the apparatus 9900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGA), controllers, microcontrollers, microprocessors, or other electronic components to perform the above method.

In an example, a non-transitory computer-readable storage medium with instructions stored thereon is also provided, such as a memory 9904 with instructions stored thereon, where the above instructions may be executed by the processor 9920 of the apparatus 9900 to perform the above method. For example, the non-transitory computer-readable storage medium may be a ROM, a Random Access Memory (RAM), a CD-ROM, a magnetic tape, a floppy disk, an optical data storage device, etc.

In an example, at least one instruction is stored in the above computer-readable storage medium, where the at least one instruction may be loaded by a processor to perform the operations performed in the method of displaying a page provided in the above example.

The technical solutions provided by an example of the present disclosure may include the following effects.

The method of displaying a page provided by an example of the present disclosure includes: acquiring page data by the preset time period, acquiring page change information based on first page data and second page data, and transmitting the page change information to a process for generating page in an operating system to instruct the process to generate a page. Since the comparison of the page data is performed periodically, even if a frequency at which the page changes is relatively high, both the amount of calculation and the time for calculating the page change will not increase significantly, thereby avoiding the problem of dropped picture frame and stalled display, and improving effect and efficiency of displaying a page.

The present disclosure may include dedicated hardware implementations such as application specific integrated circuits, programmable logic arrays and other hardware devices. The hardware implementations can be constructed to implement one or more of the methods described herein. Applications that may include the apparatus and systems of various examples can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the computing system disclosed may encompass software, firmware, and hardware implementations. The terms "module," "sub-module," "circuit," "sub-circuit," "circuitry," "sub-circuitry," "unit," or "sub-unit" may include memory (shared, dedicated, or group) that stores code or instructions that can be executed by one or more processors.

After considering the specification and practicing the present disclosure, a person of ordinary skill in the art may conceive of other examples of the present disclosure. The present disclosure is intended to include any variations, uses and adaptive changes of the present disclosure. These variations, uses and adaptive changes follow the general principle of the present disclosure and include common knowledge in the present disclosure. The specification and examples herein are intended to be illustrative only.

It is to be understood that the present disclosure is not limited to the precise structures described above and shown in the accompanying drawings and may be modified or changed without departing from the scope of the present disclosure.

## Claims

1. A method of displaying a page, **characterized in that** the method comprises:
acquiring page data for a preset time period;
acquiring page change information based on first page data and second page data, wherein the first page data is acquired in a current preset time period and the second page data is acquired in a previous preset time period; and
transmitting the page change information to a process for generating the page in an operating system.

2. The method according to claim 1, **characterized in that**, acquiring the page change information based on the first page data and the second page data comprises:
acquiring the page change information by comparing tree structure data corresponding to the first page data and the second page data.

3. The method according to claim 1, **characterized in that**, acquiring the page data for the preset time period comprises: acquiring, by a pre-established first thread, the page data for the preset time period.

4. The method according to claim 3, **characterized in that**, acquiring the page change information based on the first page data and the second page data comprises:
transmitting, by the first thread, the first page data to a pre-established second thread; and
acquiring, by the second thread, the page change information based on the first page data and the second page data, and
transmitting, by the second thread, the page change information to the first thread.

5. The method according to claim 3, **characterized in that**, transmitting the page change information to the process for generating the page in the operating system comprises:
transmitting, by the first thread, the page change information to the process for generating the page in the operating system.

6. An apparatus for displaying a page, **characterized in that**, the apparatus comprises:
a first acquiring module (401) configured to acquire page data for a preset time period;
a second acquiring module (402) configured to acquire page change information based on first page data and second page data, wherein the first page data is acquired in a current preset time period and the second page data is acquired in a previous preset time period; and
a first transmitting module (403) configured to transmit the page change information to a process for generating the page in an operating system.

7. The apparatus according to claim 6, **characterized in that**, the second acquiring module (402) comprises:
a comparing sub-module (501) configured to acquire the page change information by comparing tree structure data corresponding to the first page data and the second page data.

8. The apparatus according to claim 6, **characterized in that**, the first acquiring module (401) is configured to:
acquire, by a pre-established first thread, the page data for the preset time period.

9. The apparatus according to claim 8, **characterized in that**,
the apparatus further comprises a second transmitting module (404) configured to transmit the first page data to a pre-established second thread; and
the second acquiring module (402) is configured to acquire by the second thread the page change information based on the first page data and the second page data, and transmit the page change information to the first thread.

10. The apparatus according to any one of claims 8 to 9, **characterized in that**, the first transmitting module (401) is configured to:
transmit, by the first thread, the page change information to the process for generating the page in the operating system.

11. An apparatus for displaying a page, **characterized in that**, the apparatus comprises:
a processor; and
a memory storing machine-executable instructions,
wherein, when executing the machine-executable instructions, the processor is caused to execute the steps of a method of displaying a page according to any one of claims 1 to 5.

12. A computer program including instructions for executing the steps of a method of displaying a page according to any one of claims 1 to 5 when said program is executed by a computer.

13. A recording medium readable by a computer and having recorded thereon a computer program including instructions for executing the steps of a method of displaying a page according to any one of claims 1 to 5.
